# NEUE EUROPÄISCHE PATENTSCHRIFT

(11) **EP 0 469 189 B2**
(45) Veröffentlichungstag und Bekanntmachung des Hinweises auf die Entscheidung über den Einspruch: **17.01.2001**
(45) Hinweis auf die Patenterteilung: 13.12.1995
(21) Anmeldenummer: 90124318.8
(22) Anmeldetag: 15.12.1990
(51) Int. Cl.: G05D 23/19, F24C 15/10, G05D 23/26, H05B 3/68

(54) **Verfahren und Vorrichtung zur Steuerung von Heizelementen eines Kochherdes**
Method and apparatus for controlling heating elements of a cooking oven
Procédé et dispositif de commande d'éléments chauffants

(30) Priorität: 02.08.1990 CH 253390
(43) Veröffentlichungstag der Anmeldung: 05.02.1992
(73) Patentinhaber: E.G.O. Elektro -Gerätebau GmbH, 75038 Oberderdingen (DE)
(72) Erfinder: Hälg, Robert, CH-8307 Bisikon (CH)
(74) Vertreter: Patentanwälte Ruff, Beier und Partner

(56) Entgegenhaltungen:
- EP-A- 0 442 275
- DE-A- 2 831 858
- US-A- 4 013 859
- US-A- 4 778 978

## Beschreibung

Die vorliegende Erfindung betrifft ein Verfahren zur Steuerung von Heizelementen unter einer Glaskeramikplatte eines Kochherdes, wobei die Steuerung auf das Vorhandensein eines metallischen Kochgeschirrs im Bereich oberhalb eines Heizelementes auf der Glaskeramikplatte anspricht. Die Erfindung betrifft auch eine Vorrichtung zur Durchführung des Verfahrens.

Seit 1963 ist bereits aus der FR-A-1'392'763 eine Vorrichtung bekannt, die mit einem entsprechenden Sensor das Vorhandenseins eines Kochgeschirrs auf einer Kochplatte ermittelt. Der Sensor steht mit einer entsprechenden Steuerung in Verbindung, die nur beim Vorhandensein eines Kochgeschirrs das Heizelement so schaltet, dass es nur dann an Spannung gelegt ist. Im Prinzip handelt es sich hierbei um eine Metalldetektorschaltung. Eine rein mechanische Lösung desselben Problems, ist in der DE-A-23'09'741 dargestellt. Des weiteren ist aus der DE-A-28'31'858 bekannt mit einem Sensor bestehend aus zwei Kondensatoren zu arbeiten, der über eine in Serie liegende Oszillator ansteuerbar ist, wobei die am Ausgang des Sensors gemessene Ausgangsspannung als Steuergrösse für eine Schaltelektronik dient. Schliesslich ist aus der EP-A-0'328'092 wiederum eine Vorrichtung bekannt geworden, die mit einem Metalldetektor arbeitet Die Heizelemente des Kochherdes bestehen aus Heizspiralen, die jeweils oberhalb einer Wärme-Isolationsschicht in einer Metalltasse angeordnet sind. Der Metalldetektor ist unterhalb der Metalltasse angeordnet, wobei die Metalltasse selber einen angepassten Ausschnitt aufweist.

Es hat sich erwiesen, dass die vorgenannte Lösung vielfach zu Fehlschaltungen geführt hat. Der Metalldetektor, der hier aus einer Spule mit Ferritkern besteht, wird von zwei Störfeldern beeinflusst, die sich kaum vermeiden lassen. Zum einen findet eine Beeinflussung des Magnetfeldes durch Schaltvorgänge im Kochherd selber statt. Trotz entsprechende magnetische Schirmung lässt sich ein solcher Einfluss nicht vollständig eliminieren, weil ansonsten die gewollte Beeinflussung durch das Kochgeschirr ebenfalls keine Wirkung mehr hätte. Die zweite unerwünschte Beeinflussung erfolgt durch das Heizelement selber. Durch die Erwärmung erfolgt automatisch eine Veränderung der physikalischen Grössen, die das Magnetfeld beeinflussen. Entsprechende Vorkehrungen um den Metalldetektor auf eine möglichst gleichbleibende Temperatur zu halten, sind nicht nur aufwendig, sondern ebenfalls störungsanfällig. In der zitierten EP-A-0'328'092 wird ferner vorgeschlagen, mit der Ueberwachungschaltung so zu arbeiten, dass die Heizelemente in regelmässigen Abständen abgeschaltet werden, worauf die Topferkennungsschaltung betrieben wird und nach Massgabe der ermittelten Kochgeschirre die entsprechenden Heizelemente wieder zugeschaltet werden. Die bei solchen Heizelemente anfallenden Schaltströme sind von erheblicher Grösse. Folglich sind bei dieser Arbeitsweise entsprechende Verschleisserscheinungen an den Schaltern nach relativ kurzer Zeit bemerkbar.

Die US-A-3'868'626 zeigt ein Induktionskochgerät mit Belastungssensor.
Letztlich geht aus der EP-A-0'442'275 die auf eine Priorität vom 10. Februar 1990 zurückgeht und am 21. August 1991 veröffentlicht worden ist eine Vorrichtung mit den Merkmalen des Oberbegriffes des Patentanspruches 2 hervor, welche verfahrensmässig gleich arbeitet wie im Oberbegriff des Patentanspruches 1 angegeben. Gemäss der EP-A-0'442'275 wird im Oszillatorstromkreis, in dem die Luftspule liegt, nach einer gegebenen konstanten Zeitspanne die anliegende Frequenz gemessen und mit einem vorher vorhandenen Wert verglichen beziehungsweise die Differenz gebildet und die Kochstelle entsprechend geregelt. Im Gegensatz zur Erfindung wird hier die Vergleichsmessung von einem Festwert ausgehend vorgenommen und nicht vom vorgegebenen aktuellen stets nachgeführten Frequenzwert.
Die Vorrichtung gemäss der EP-A-0'442'275 hat eine in einer Ausnehmung im Isolationskörper integriert untergebrachte Luftspule.
Sowohl die unterschiedliche Vergleichswertmessung als auch die gegenüber der Erfindung abweichende Anordnung der Luftspule führt zu unterschiedlichen Ansprech- und Steuerverhalten der beiden Vorrichtungen.

Es ist daher die Aufgabe der vorliegenden Erfindung, ein Verfahren zur Steuerung von Heizelementen unter einer Glaskeramikplatte eines Kochherdes zu schaffen, wobei die Steuerung auf das Vorhandensein eines metallischen Kochgeschirres im Bereich oberhalb eines Heizelementes auf der Glaskeramikplatte anspricht welches Verfahren weniger Fehlschaltungen verursacht und automatisch Veränderungen durch Temperaturschwankungen kompensiert.

Es ist ferner eine Aufgabe der vorliegenden Erfindung, eine Vorrichtung zu schaffen, zur Durchführung des erfindungsgemässen Verfahrens, bei dem der erforderliche Sensor in die Metalltasse des Heizelementes eingebaut werden kann.

Die erstgenannte Aufgabe erfüllt ein Verfahren mit den Merkmalen des Patentanspruches 1. Die gewünschte Vorrichtung zur Durchführung des Verfahrens weist die Merkmale des Patentanspruches 2 auf.

In der beiliegenden Zeichnung ist ein Ausführungsbeispiel des Erfindungsgegenstandes vereinfacht dargestellt und anhand der nachfolgenden Beschreibung erläutert. Es zeigt:
- Figur 1: ein Blockschema zur Erläuterung der erfindungsgemässen Vorrichtung und
- Figur 2: ein Flussdiagramm zur Veranschaulichung des erfindungsgemässen Verfahrens, nach dem die Vorrichtung arbeitet, sowie
- Figur 3: die Anordnung des Sensors der erfindungsgemässen Vorrichtung.

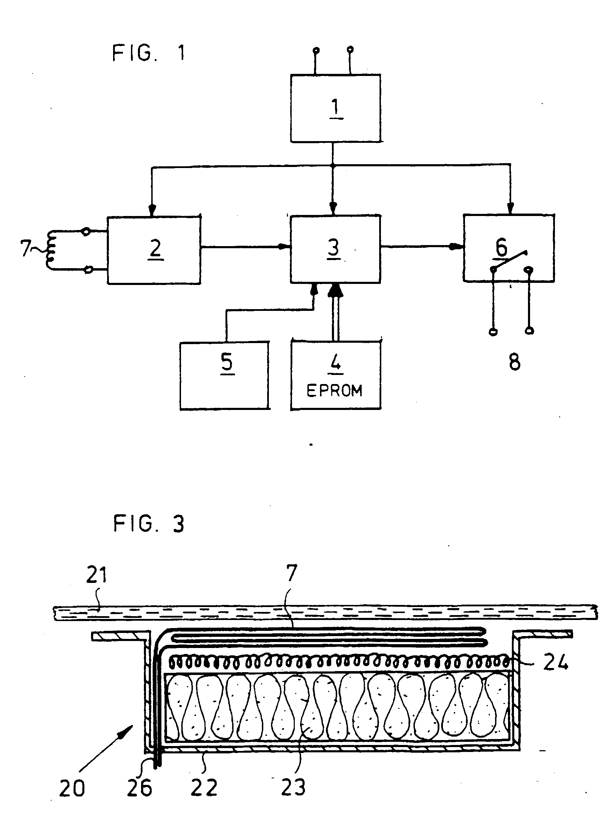

Das Blockschema der erfindungsgemässen Vorrichtung zur Durchführung des nachfolgend zu beschreibenden ebenfalls erfindungsgemässen Verfahrens ist in Figur 1 dargestellt. An der eingangsseitig vorhandenen 220 Volt-Wechselspannung ist die Speisung 1 angeschlossen. Die Speisung 1 enthält einen Gleichrichter, sowie einen Spannungswandler. An der Speisung 1 liegen ein Oszillator-Schwingkreis 2, ein Mikroprozessor 3 und ein Ein/Aus-Relais 6 an. Der Oszillator-Schwingkreis 2 umfasst als wesentlichstes Element eine Luftspule 7. Diese ist, wie nachher noch zu beschreiben ist, im Heizelement des Kochherdes untergebracht Die Luftspule 7 ist eine kernlose Spule mit nur wenigen Windungen. Der Schwingkreis 2 mit der Luftspule 7 ist mit einem Mikroprozessor 3 verbunden. Der Mikroprozessor 3 lässt sich mit einer EPROM 4 programieren. Ein Quarzoszillator 5 dient dazu den Mikroprozessor mit einem Zeittakt zu versehen. Der Mikroprozessor 3 liefert unter noch zu beschreibenden Bedingungen ein Steuersignal an das genannten Ein/Aus-Schaltrelais 6. Dieser Schaltrelais 6 ist im Heizschaltkreis 8 eingebaut, über den die Heizspirale gespiesen wird.

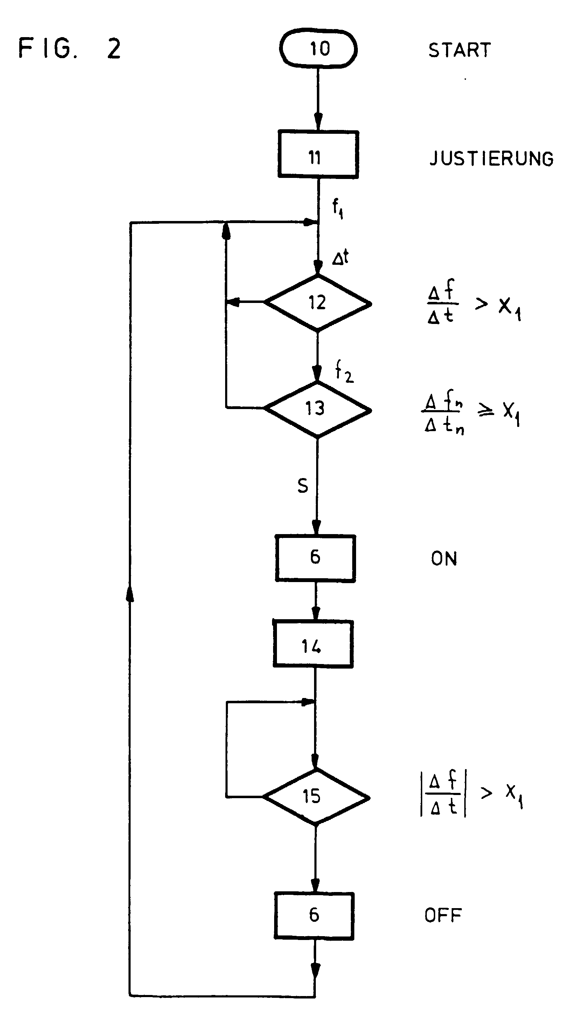

Bevor noch auf weitere, vorrichtungsmässige Details eingegangen wird, soll nun die Funktion, der eben beschriebenen Vorrichtung erläutert werden. Hierzu dient das Flussdiagramm gemäss der Figur 2. Das Verfahren wird injiziert durch den Start 10. In einem ersten Schritt 11 stellt der Mikroprozessor 3 die Frequenz f₁ des Luftspulen-Schwingkreises 2 fest. In diesem Zustand sollte sich noch kein Kochgeschirr auf dem Kochherd befinden. Entsprechend der herrschenden Temperatur wird eine bestimmte Frequenz f festgestellt. In regelmässigen Zeitabschnitten Δt wird die dann herrschende Frequenz f₂ gemessen. Die dann herrschende Frequenzdifferenz zwischen f₁ und f₂ pro Zeiteinheit Δt ergibt einen Wert X₁, dieser Wert muss einen vorgegebenen Minimalwert überschreiten, bevor der nächste Schritt 13 erfolgt. Ist jedoch X₁ kleiner, wie ein vorgegebener Wert, so wird die Schlaufe wiederholt, das heisst nach einer weiteren Zeitspanne Δt erfolgt eine weitere Frequenzmessung, die wiederum mit der vorgegebenen, festgestellten Frequenz verglichen wird. Wird schliesslich eine Frequenzdifferenz pro Zeiteinheit festgestellt, die grösser als die vorgegebene Grösse ist, so wird in einem Schritt 13 festgestellt, ob diese Frequenzdifferenz in einer nächsten Zeitspanne Δt noch vorhanden ist. Besteht diese Frequenzdifferenz in mehreren, vorgegebener Anzahl Zeiteinheiten; so wird ein Signal s an das Ein/Aus-Schaltrelais 6 gegeben. Damit wird der Heizschaltkreis 8 und die darin eingeschlossene Heizspirale eingeschaltet. Der festgestellte Wert X₁ wurde gleichzeitig als Referenzsignal gespeichert. Mit der nun beginnenden Heizperiode findet eine Erwärmung statt, die auch die gemessene Frequenz beeinflusst. Diese Frequenzänderung ist jedoch relativ langsam. Würde man jedoch bei der Vergleichsermittlung immer wieder auf die zuerst festgelegte Frequenz f₁ zurückgehen, so würde mit der Zeit, so grosse Differenzen entstehen, dass eine weitere Schaltung des Relais erfolgen würde und die Heizplatte abstellen würde. Um dies zu vermeiden, wird vom Zeitpunkt, dass das Relais 6 geschaltet hat, die Frequenzdifferenz immer bezüglich der vorangegangenen Frequenz ermittelt, wobei nun die letztgenannte Frequenz als neue Referenzfrequenz für die nachfolgende Auswertung dient. Diesem Schritt 14 folgt wiederum ein Schritt 15 in Form einer wiederholenden Schlaufe, bei der nun allerdings der Absolutwert der Frequenzänderung pro Zeiteinheit mit dem angepassten Wert X₁ erfolgt. Ueberschreitet dieser Absolutwert den angepassten Wert X₁, so wird wiederum das Ein/Aus-Schaltrelais 6 angesteuert und das Relais 6 fällt ab. Damit ist der Heizschaltkreis 8 unterbrochen. Die Frequenzmessungen in Zeitintervallen von Δt wird jedoch weitergeführt. Erst wenn eine Frequenzzunahme pro Zeiteinheit über ein vorgegebenes Mass festgestellt wird, beginnt der Zyklus, wie vorher beschrieben, der Schritt 12 von neuem.

Der anfängliche Wert X₁, der ein Mass der Frequenzänderung pro Zeiteinheit dargestellt ist, abhängig von den physikalischen Grössen des Kochgeschirres. Dies bedeutet, dass der Wert abhängig ist, von der Grösse des Kochgeschirres, vom Material, aus dem er hergestellt ist und dem darin befindlichen Kochgut. All dies beeinflusst den Schwingkreis mit der Luftspule 7.

Im Schritt 15 wird nicht mehr die Frequenzsteigerung pro Zeiteinheit festgestellt, sondern nur noch der Absolutwert der Frequenzänderung pro Zeiteinheit. Wird nämlich das Kochgeschirr aus dem Bereich der Messsonde entfernt, so ist die Frequenzdifferenz negativ. In diesem Fall ist natürlich eine Abschaltung erwünscht.

Die im Schritt 13 beschriebene Wiederholung der Messung und Vergleich mit der vorherigen Messung geschieht um Fehlschaltungen auszuschliessen, die durch ein kurzzeitiges Verschieben einer Pfanne erfolgen könnte. Erst wenn die entsprechende Pfanne längere Zeit auf dem entsprechenden Kochfeld steht, soll eine Schaltung erfolgen. Dies ist mit der vorgenannten Vorkehrung garantiert.

In der Figur 3 ist ein Querschnitt durch ein herkömmliches Heizelement dargestellt. Es befindet sich direkt unter einer Glaskeramikplatte 21. Das gesamte Heizelement ist mit 20 bezeichnet. Das herkömmliche Heizelement 20, welches meistens von einem darauf spezialisierten Betrieb gefertigt wird, umfasst eine Metalltasse 22. In dieser liegt eine Isolationsplatte 23 mit einem hohen Isolationsgrad. Oberhalb der Isolationsplatte 23 ist die Heizspirale 24 angeordnet. Im dargestellten Beispiel liegt die erfindungswesentliche Luftspule 25 mit relativ wenigen Windungen oberhalb der Heizspirale 24 direkt unterhalb der Glaskeramikplatte 21. Die Anschlüsse 26, die von der Luftspule 25 zur eigentlichen Steuerungschaltung führen, können entweder durch die Isolationsplatte 22 hindurchgeführt werden oder seitlich aus der Metalltasse 22 hinausgeleitet werden. Neben der hier dargestellten Lösung, hat sich gezeigt, dass ohne Beeinflussung der Messung und ohne Auftretung von Fehlschaltungen die Luftspule 25 auch unterhalb der Heizspirale 24 angeordnet sein kann.

## Patentansprüche

1. Verfahren zur Steuerung von Heizelementen unter einer Glaskeramikplatte, wobei die Steuerung auf das Vorhandensein eines metallischen Kochgeschirres im Bereich oberhalb eines Heizelementes (20) auf der Glaskeramikplatte (21) anspricht, mit einem, eine Heizspirale schaltenden Ein/Aus Relais (6), welches in Abhängigkeit der Frequenzänderung pro Zeiteinheit einer unter der Glaskeramik angeordneten Luftspule (7) in einem Oszillator-Schwingkreis (2) gesteuert wird,
mit einem Quarzoszillator (5), welcher die Steuerung mit einem Zeittakt versieht, in welchem Zeittakt ein Messzyklus durchgeführt wird, an dessen Anfang die Frequenz des Schwingkreises ermittelt wird,
dadurch gekennzeichnet, dass
nach einem Start des Verfahrens zuerst die Frequenz (f1) im Luftspulen (7) Oszillator-Schwingkreis (2) gemessen wird,
worauf nach immer jeweils einem Zeitabschnitt (Δt) die Frequenz (f2) im Luftspulen (7) Oszillator-Schwingkreis (2) wiederum gemessen wird
und mit der nach dem Start gemessenen Frequenz (f1) verglichen und eine Differenz (X1) gebildet und gespeichert wird, worauf
sobald festgestellt wird, dass die beiden Frequenzen (f1, f2) eine Frequenzdifferenz (X1) pro Zeiten heit (Δt) ergeben, welche grösser ist als ein vorgegebener Minimalwert, und dass diese Differenz (X1) über eine vorgegebene Anzahl Zeitabschnitte vorhanden ist,
wird ein Signal (5) zum Einschalten an das Ein/Aus Relais (6) gegeben, welches die angeschlossene Heizspirale einschaltet,
worauf bei eingeschalteter Heizspirale die Differenz (X1) der beiden Frequenzen (f1,f2) gespeichert wird
und wiederum nach immer jeweils einem Zeitabschnitt (Δt) die Frequenz (f2) gemessen wird und mit der unmittelbar vorhergehenden gemessenen Frequenz (f2) verglichen,
und die erhaltene Differenz (X1) gespeichert wird, so dass die Differenz (X1) immer der nach jedem Zeitabschnitt (Δt) gemessen Frequenz (f2) angepasst wird, und dass, sobald der Absolutwert der erhaltenen Differenz grösser ist als der angepasste Differenzwert (X1) ist, ein Ausschaltsignal an das Ein/Aus Relais (6) geliefert wird, worauf die Heizspirale ausgeschaltet wird.

2. Vorrichtung zur Durchführung des Verfahrens nach Anspruch 1 an einem Kochherd mit Heizelementen (20) in der Form von Heizspiralen (24), die jeweils oberhalb einer Wärme-lsolationsschicht (23) in einer Metalltasse (22) angeordnet sind und
mit einer Glaskeramikplatte (21) als Abdeckung und
einem Schwingkreis (2) mit einer innerhalb der Metalltasse (22) angeordneten Luftspule (7), einem programmierbaren Mikroprozwessor (3) und einem Zeitelement (5), wobei der Mirkoprozessor mit einem Ein/Aus-Relais (6) zur Steuerung des Heizelmentes in Verbindug steht, dadurch gekennzeichnet, dass
die Luftspule (7) unterhalb der Heizspirale (24) und zwischen der Isolationsschicht (23) und der Metalltasse (22) angeordnet ist.

## Claims

1. A method for controlling of heating elements under a glass ceramic plate, the control responding to the presence of a metal cooking utensil in the area above a heating element (20) on the glass ceramic plate (21), with an on-off relay (6) switching a heating coil which is controlled as a function of a frequency change per time unit of an air coil (7) in an oscillator circuit (2) located below the glass ceramic plate, with a quartz oscillator (5) providing the control with a timing cycle, in which timing cycle a measuring cycle is executed, at the beginning of which the frequency of the oscillator circuit is determined, wherein
a) after a start of the procedure first the frequency (f1) in the air coil (7) oscillator circuit (2) is measured, then
the frequency (f2) in the air coil (7) oscillator circuit (2) is measured repeatedly after each time interval delta T, and
is compared with the frequency (f1) measured at the start and a difference (X1) is established and stored, then
b) as soon as there is a difference (X1) established between the two frequencies (f1, f2), which exceeds a predetermined minimum value, and this difference (X1) is present over a predetermined number of time intervals,
a switching signal is applied to the on-off relay (6), for switching on the connected heating coil, then
c) with switched on heating coil, the difference (X1) of the two frequencies (f1, f2) is stored, and repeatedly after each time interval delta T, the frequency (f2) is measured and compared with the immediately preceding established frequency (f2), and the established difference (X1) is stored, so that the difference (X1) is always adapted to the frequency (f2) measured in each time interval delta T, and that,
as soon as the absolute value of the established difference exceeds the adapted difference value (X1), a switching off signal is applied to the on-off relay (6), then the heating coil is switched off.

2. An apparatus for performing the method according to claim 1, on a cooker having heating elements (20) in the form of heating coils (24), which are in each case positioned above a thermal insulating layer (23) in a metal holder (22) and having a glass ceramic plate (21) as a cover, and comprising an oscillator circuit (2) with an air coil (7) located within the metal holder (22), a programmable microprocessor (3), as well as a timing element (5), the microprocessor being connected to an on-off relay (6) for controlling the heating element, characterized in that the air coil (7) is positioned below the heating coil (24) and between the insulating layer (23) and the metal holder (22).

## Revendications

1. Procédé pour la commande d'éléments chauffants sous une plaque de vitrocéramique, dans lequel la commande correspond à la présence d'un ustensile de cuisson métallique dans la zone située au-dessus d'un élément chauffant (20) sur la plaque de vitrocéramique (21), avec un relais tout ou rien (6) pour commuter une spire chauffante, commandé en fonction de la modification de fréquence par unité de temps d'une bobine sans fer (7) disposée sous la plaque de vitrocéramique dans un circuit résonnant d'oscillateur (2), avec un oscillateur à quartz (5) qui sert à pourvoir la commande d'une base de temps, par lequel base de temps est effectué un cycle de mesure, dans une première étape duquel est déterminée la fréquence du circuit résonnant, caractérisé en ce que
a) au début du procédé la fréquence (f1) dans la bobine sans fer (7) du circuit résonnant d'oscillateur (2) est déterminée,
puis à des intervalles de temps réguliers delta T la fréquence (f2) dans la bobine sans fer (7) du circuit résonnant d'oscillateur (2) est redéterminée et comparée avec la fréquence (f1) déterminée au début et une différence (X1) est déterminée et mémorisée, puis
b) aussitôt qu'il est constatée que les deux fréquences (f1, f2) donnent une différence (X1) dépassant une valeur minimale préétablie et que cette différence (X1) consiste en plusieurs intervalles de temps en nombre prédéfini,
un signal de commutation est envoyé au relais tout ou rien (6) pour mettre en circuit la spire chauffante intercalée, puis
c) pendant que la spire chauffante est en circuit la différence (X1) des fréquences (f1, f2) est mémorisée, et
à des intervalles de temps réguliers delta T la fréquence (f2) est redéterminée et comparée avec la fréquence (f2) directement précédente, et
la différence (X1) résultante est mémorisée, tel que la différence (X1) est ajustée à la fréquence (f2) déterminée après chaque intervalle de temps delta T, et que,
aussitôt que la valeur absolue de la différence dépasse la valeur (X1) adaptée, un signal de interruption est envoyé au relais tout ou rien (6) pour couper la spire chauffante.

2. Dispositif pour la mise en oeuvre du procédé selon la revendication 1 sur une cuisinière avec éléments chauffants (20) sous la forme de spirales de chauffage (24), qui sont à chaque fois disposées au-dessus d'une couche d'isolation thermique (23) dans une cavité métallique (22) et avec une plaque de vitrocéramique (21) pour recouvrement et un circuit résonnant (2) avec une bobine sans fer (7) disposée à l'intérieur de la cavité métallique (22) et un microprocesseur programmable (3), ainsi qu'un élément relatif au temps (5), tandis que le microprocesseur est connecté à un relais tout ou rien (6) pour la commande de l'élément chauffant, caractérisé en ce que la bobine sans fer (7) est disposée au-dessous de la spirale de chauffage (24) et entre la couche d'isolation (23) et la cavité métallique (22).
